# EUROPEAN PATENT APPLICATION

(11) **EP 3 406 371 A1**
(43) Date of publication of application: **28.11.2018**
(21) Application number: 17172232.5
(22) Date of filing: 22.05.2017
(51) Int. Cl.: B22F 3/105, B28B 1/00

(54) **METHOD OF RELIEVING MECHANICAL STRESS IN ADDITIVE MANUFACTURING**

(71) Applicant: Siemens Aktiengesellschaft, 80333 München (DE)
(72) Inventor: Rule, David, 10115 Berlin (DE)

(57) **Abstract**

A method for relieving mechanical stress in an additively built component (2) is presented. The method comprises providing a setup (100) of an as-built component (2) bonded to a build plate (1), applying an embrittlement agent (10) at an interface (3) between the component (2) and the build plate (1), heating the setup (100) of the component (2) and the build plate (1) to a predetermined temperature (Tₚ), such that the embrittlement agent (10) diffuses into the setup (100) at the interface (3), and inducing a crack separation of the plate (1) and the component (2) due to the embrittled interface (10) during a cooling of the setup (100). Moreover, a corresponding additively manufactured component (2) is presented.

## Description

The present invention relates to a method of relieving mechanical stress in additive manufacturing and a corresponding component.

Preferably, the component denotes a component applied in a turbo machine, e.g. in the flow path hardware of a gas turbine. The component is preferably made of a superalloy or nickel-based alloy, particularly a precipitation, age or solution hardened alloy.

Additive manufacturing techniques comprise e.g. powder bed methods, such as selective laser melting (SLM) or selective laser sintering (SLS) or electron beam melting (EBM).

A method of selective laser melting is described in EP 2 601 006 B1, for example.

Additive manufacturing methods have proven to be useful and advantageous in the fabrication of prototypes or complex and filigree components, such as lightweight design or cooling components comprising mazelike internal structures. Further, the additive manufacture stands out for its short chain of process steps, as a manufacturing step can be carried out directly based on corresponding CAD/CAM data set.

Powder bed manufacturing methods such as selective laser melting or selective laser sintering are relatively well known methods for fabricating, prototyping or manufacturing parts or components from powder material, for instance. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the geometry of the component to be manufactured.

As a drawback to the additive manufacture, selective laser melted components usually comprise high residual stresses in the as-built condition. In order to relieve the stress, the component is usually stress-relieved while still being attached to an underlying build plate, platform or support. Said build plate effects a stabilising of the component or prevents it from being distorted too much while stress is being relieved, e.g. when the whole setup (of component and build plate) is heated to a predetermined temperature, such as a stress-relief temperature.

During a subsequent cooling, or cool-down, a temperature gradient is usually created in the setup, particularly at an interface of or between the build plate and the component as the build plate usually comprises a greater heat capacity as compared to the component. As a consequence, stresses are created due to heat flows from the build plate to the component. Stress can further evolve due to different thermal expansion coefficients of the material of the build plate and that one of the component.

Actually there are few solutions known, by means of which the generation of stresses in additively manufactured components can be prevented. State-of-the-art is usually to use solid, large build plates which may stabilize the component during conventional diffusion or heat relief methods in order to avoid distortion on the component.

It is an object of the present invention to provide means, which solve the described problems. Particularly, means to self-separate the component from the build plate or vice versa after a stress relief procedure are prevented, preferably without the application of (further) external mechanical impacts.

The mentioned object is achieved by the subject-matters of the independent claims. Advantageous embodiments are subject-matter of the dependent claims.

The mentioned "components" may be any ceramic or metallic components. Preferably, the components may pertain to components of a turbine, such as a gas turbine.

The term "additive" in the context of manufacturing shall particularly denote a layer-wise, generative and/or bottom-up manufacturing process. The additive manufacturing as described herein may be or relate to rapid prototyping.

An aspect of the present invention relates to a method for relieving mechanical stress in an additively built component.

The method comprises providing a setup of an as-built component bonded to a build plate. Said bond may be an adhesive and/or metallurgical bond, as usual in the additive manufacture. The as-built condition of the component preferably relates to a point in time directly after the actual additive buildup.

The method further comprises applying an embrittlement agent at an interface between the component and the build plate. The embrittlement agent is preferably applied in the form of a paste or braze from the outside. Said interface may be provided by an interlayer.

The method further comprises heating the setup of the component in the build plate to a predetermined temperature or diffusion temperature, such that the embrittlement agent diffuses to the setup at the interface.

The predetermined temperature is preferably a temperature at which a significant amount of stress is relieved in the setup and, furthermore, the embrittlement agent tends to significantly diffuse into the interface, such that a crack separation may, e.g. upon cooling down, be facilitated.

The method further comprises inducing a crack separation of the plate and the component (or vice versa) due to the embrittled interface prior to or during a cooling or cool-down of the setup.

Said crack separation is preferably induced by the effect of the embrittlement agent which had diffused into the setup and embrittled the interface. This is preferably carried out without the need of an additional mechanical impact.

The presented method has further the advantage, that - during or after the cooling, a (thermally induced) distortion in the build plate and in the part, article or component is decoupled which allows to avoid adverse stress effects, e.g. heat transferred from the build plate to the component. The presented concept allows to decouple a (possible) distortion in the part or component from a (possible) distortion in the build plate, or vice versa.

In an embodiment, the embrittlement agent and the predetermined temperature are chosen such that a temperature induced (partial) relief of mechanical stress already occurs when the predetermined temperature is reached. Preferably, a significant stress relief has already been performed when the predetermined temperature is reached, as this allows for providing a component with advantageous thermo-mechanical properties.

In an embodiment, the crack separation is induced without external mechanical impacts, such as sawing, machining or cutting, for example.

In an embodiment, the heating rate to attain the predetermined temperature is lowered in the presented method as compared to a conventional solution or diffusion heat treatment process. Said solution or diffusion heat treatment process may be a process of the prior art. Said lowering may effect the prevention of untimely separation of the component and the build plate and to minimize stress created from temperature gradients.

In an embodiment, the component is bonded to or manufactured onto the build plate via an interlayer. Said interlayer may e.g. be provided by or on top of the build plate. The interlayer may be a support structure for example. The interlayer may as well be a part of the build plate which is provisioned as a blend or slice. Accordingly, the material of the interlayer and the material of the build plate and/or the component may be the same. Alternatively, the material of the interlayer may be different from said other materials.

In an embodiment, the embrittlement agent is applied to the interface via the interlayer.

In an embodiment, the interface is recessed or embodied noncontinuous.

In an embodiment, the interlayer is recessed in order to facilitate a homogeneous or distributed diffusion of the embrittlement agent into the interlayer.

In an embodiment, the predetermined temperature is chosen such that - during heating - the embrittlement agent diffuses only partly into the setup, e.g. to an extent that a separation may expediently be realised afterwards.

In an embodiment, the embrittlement agent comprises chromium, boron, hydrogen, an acid and/or a lye.

In an embodiment, the embrittlement process, i.e. the process of enclosing the interface, is a corrosive and/or oxidative process.

In an embodiment, the method as described herein is or is part of the solution heat treatment or diffusion heat treatment process, particularly in the field of additive manufacturing.

A further aspect of the present invention relates to a method of additively manufacturing of the component, preferably onto said build plate, e.g. by selective laser melting or electron beam melting. This method of additively manufacturing comprises the method of relieving mechanical stress, as described.

A further aspect of the present invention relates to a component manufactured by the method as described previously, wherein the component is a part of a turbo machine, such as a gas turbine, and wherein the component comprises a state of lower stress or strain as compared to a component manufactured without the method of relieving mechanical stress, such as a conventional method of additive manufacturing of fabrication.

Advantages relating to the described method of relieving mechanical stress and/or the method of manufacturing may as well pertain to the component and vice versa.

Further features, expediencies and advantageous refinements become apparent from the following description of the exemplary embodiment in connection with the Figures.
Figure 1 shows a schematic image of a cross-section or a side view of a setup, indicating a step of the described method.
Figure 2 shows a schematic image of a cross-section or a side view of the setup, indicating a further step of the described method.
Figure 3 shows a schematic image of a cross-section or a side view of the setup, indicating a further step of the described method.
Figure 4 shows a schematic image of a cross-section or a side view of the setup, indicating an alternative embodiment of the described method.
Figure 5 shows a simplified flow chart of method steps of the presented method.

Like elements, elements of the same kind and identically acting elements may be provided with the same reference numerals in the Figures.

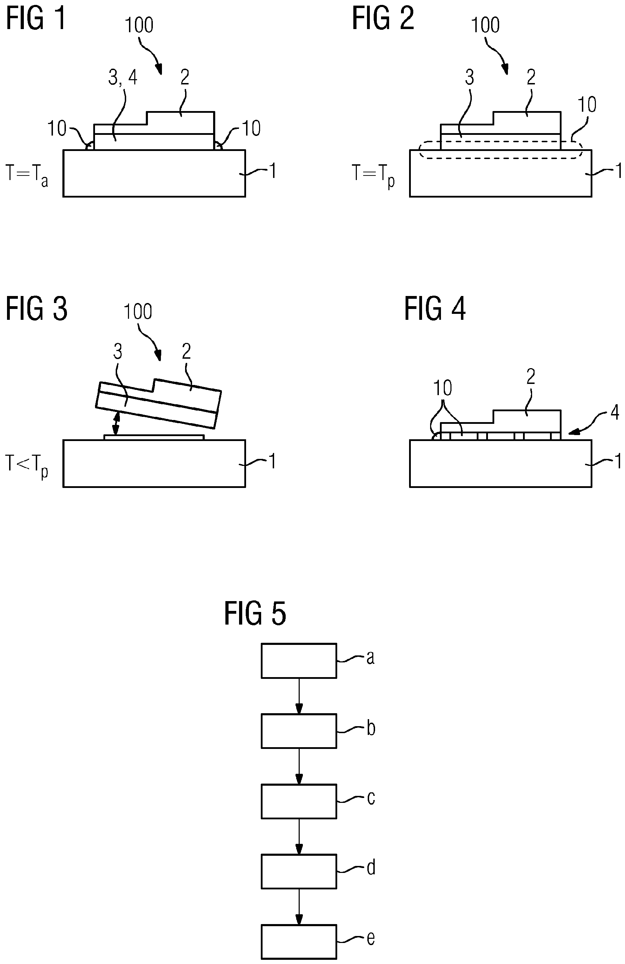

Figure 1 shows an additively manufactured component 2. Said component 2 is preferably manufactured by selective laser melting, selective laser sintering and/or electron beam melting. Said component 2 is preferably present in an as-built state. Thus, the component is preferably still bonded to an underlying substrate, support a build plate 1, as is usual to the described additive manufacturing techniques.

Conventionally, the setup 100 consisting of the build plate 1 and the component 2 adhered to its manufacturing plane, is - after the additive buildup - placed in an oven or the like for mechanical stress relief by heat treatment. Still during this heat treatment, the build plate shall stabilise the component against mechanical distortion.

As part of the presented novel method, an embrittlement agent 10 is applied to or at an interface 3 between the component 2 and the build plate 1. Said embrittlement agent 10 may be or comprise a braze, preferably any substance which is susceptible to melt and diffuse into the structure of the setup 100 at the interface 3. This is preferably facilitated at temperatures at which conventional mechanical stress relief heat treatment is carried out, e.g. at temperatures of 500°, 600°, 700°, 800°, 1000, 1100°, 1200° C or even higher.

Said embrittlement agent 10 may particularly be applied by means known to a skilled person.

Next to Figure 1 on the left side, a temperature T equal to Tₐ, i.e. e.g. an ambient temperature is indicated.

Figure 2 shows in contrast to Figure 1 and indicated by the dashed region, diffusion of the embrittlement agent 10 into the structure of the setup at the interface. Preferably, the predetermined (elevated) temperature, preferably a temperature between 1100° C and 1200° C, effects the embrittlement agent to diffuse in and distribute over a significant part of the interface 3, such that, in a later step, a separation of the base plate and the component can be carried out (cf. Figure 3). According to the presented method, the embrittlement agent 10 preferably infiltrates the interface or the material at the interface to an extent, at which a later separation of the inverse components can be expediently carried out.

Next to Figure 2 on the left side, a temperature T equal to Tₚ, i.e. e.g. the predetermined temperature is indicated. Said temperature can be a temperatures of 500°, 600°, 700°, 800°, 1000, 1100°, 1200° C or even higher, such as preferably between 1100° C and 1200° C.

To this effect, the setup 100 may be heated to the predetermined temperature Tₚ. Preferably, at said predetermined temperature, a partial, preferably a significant relief of mechanical stress in the setup has already occurred, such that, in other words, the component is ready to be separated from the build plate. The embrittlement agent and/or the predetermined temperature are preferably chosen, such that, on one hand, an expedient stress relief has already occurred at the predetermined temperature, and, on the other hand, the embrittlement agent has, at that temperature, already infiltrated and diffused into the interface.

The heating or warming of the setup 100 to the predetermined temperature may further be carried out with a lower heating rate as compared to conventional diffusion a solution heat treatment methods, in order to prevent an untimely separation of the component and the build plate as well as to avoid adverse stress effects.

The embrittlement agent may comprise chromium, boron, hydrogen, an acid and/or a lye.

The embrittlement process may, thus, be a corrosive and/or oxidative process.

Figure 3 shows a situation in which the temperature has already been lowered as compared to the predetermined temperature, in other words, the setup 100 is shown during a cool-down following said warming. It is shown that - at this temperature - the separation of the component 2 and the build plate 1 has occurred, viz. without an external mechanical impact, such as manual machining step or the like. Said separation may be a self-separation, as it is preferably carried out without further external influences, such as sawing or cutting. Advantageously, the component is provided with a particularly low stress level as, e.g. during cooling down, no further distortion due to heat flows between the build plate and the component (or vice versa) occur.

Next to Figure 3 on the left side, a temperature T smaller than Tₚ is shown, indicating the cool-down.

Figure 4 shows an alternative embodiment of the setup, i.e. a setup, wherein the component 2 has been additively manufactured onto a recessed or pre-notched support structure or interlayer 4. Said interlayer is preferably recessed or notched (pre-notched) as compared to the (bulk) material of the build plate 1 or interface 3 as shown in Figure 1. This embodiment may ease a distribution of the embrittlement agent over the whole interface (area), and thus to an advantageous embodiment of the presented method.

Figure 5 shows a simplified flowchart of method steps according to the present invention.
Step a) indicates an additive manufacture of the component.
Step b) indicates the providing of the setup of the as built component and the build plate still adhered to the component.
Step c) indicates the application of the embrittlement agent as described.
Step d) indicates the heating of the setup as described.
Step e) indicates the inducing of a crack or self-separation of the plate and the component due to the embrittled interface during a cooling down, as shown in and described by means of Figure 3.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method for relieving mechanical stress in an additively built component (2) comprising the steps of:
- providing a setup (100) of an as-built component (2) bonded to a build plate (1),
- applying an embrittlement agent (10) at an interface (3) between the component (2) and the build plate (1),
- heating the setup (100) of the component (2) and the build plate (1) to a predetermined temperature (Tₚ), such that the embrittlement agent (10) diffuses into the setup (100) at the interface (3), and
- inducing a crack separation of the build plate (10) and the component (2) due to the embrittled interface during a cooling of the setup (100).

2. Method according to claim 1, wherein the embrittlement agent and the predetermined temperature (Tₚ) are chosen such that a temperature-induced relief of mechanical stress already occurs when the predetermined temperature (Tₚ) is reached.

3. Method according to claim 1 or 2, wherein the crack separation is induced without an external mechanical impact.

4. Method according to one of the previous claims, wherein the heating rate to attain the predetermined temperature (Tₚ) is lowered as compared to a conventional solution or diffusion heat treatment process.

5. Method according to one of the previous claims, wherein the component is bonded to the build plate via an interlayer, such as a support structure, and wherein the embrittlement agent is applied to the interface via the interlayer.

6. Method according to claim 5, wherein the interlayer is recessed in order to facilitate a homogeneous diffusion of the embrittlement agent into the interlayer.

7. Method according to one of the previous claims, wherein the predetermined temperature (Tₚ) is chosen such that - during heating the embrittlement agent diffuses only partly into the setup.

8. Method according to one of the previous claims, wherein the embrittlement agent comprises chromium, boron, hydrogen, an acid and/or a lye.

9. Method according to one of the previous claims, wherein the embrittlement process is a corrosive and/or oxidative process.

10. Method according to one of the previous claims, wherein the method is or is part of a solution heat treatment or diffusion heat treatment process.

11. Method of additive manufacturing of a component onto a build plate, e.g. by selective laser melting or electron beam melting, the method comprising the method for relieving mechanical stress according to one of the previous claims.

12. Component manufactured by the method according to claim 11, wherein the component is a part of a turbo machine, such as a gas turbine, and wherein the component comprises a state of lower stress as compared to a component manufactured without the method of relieving mechanical stress.
